# EUROPEAN PATENT APPLICATION

(11) **EP 0 863 056 A1**
(43) Date of publication of application: **09.09.1998**
(21) Application number: 98200322.0
(22) Date of filing: 04.02.1998
(51) Int. Cl.: B60R 21/04, F16F 7/12

(54) **Energy absorbing structure**

(30) Priority: 03.03.1997 US 810393
(71) Applicant: GENERAL MOTORS CORPORATION, Detroit Michigan 48202 (US)
(72) Inventor: Manzor, Al, Clinton Township, Michigan 48036 (US); Odumodu, Kennedy Uchenna, Ypsilanti, Michigan 48197 (US)
(74) Representative: Denton, Michael John

(57) **Abstract**

An energy absorbing structure including an injection molded base plate (24) has a plurality of hollow cylindrical tubes (26) formed integrally therewith and projecting generally normal therefrom in spaced relation from each other. Each cylindrical tube (26) has a base integrally molded with the base plate (24) and a distal end spaced from the base so that the tube obtains a preselected length which collapses under load to absorb energy. The tubes preferably have a greater wall thickness at the base than at the distal end and the wall thickness preferably tapers uniformly from the greater thickness at the base to the thinner thickness at the distal end. The tubes may be interconnected at the base by a web structure (32,34) integrally molded between the base wall and the tubes to stiffen the tubes against bending. The energy absorbing characteristics of the structure can be varied in a preselected manner by varying the length of the tubes, the number of the tubes, the spacing of the tubes, the thickness of the tubes and the plastic material used to mold the tubes.

## Description

### Technical Field

The invention relates to an energy absorber for a motor vehicle and, more particularly, provides a plurality of hollow cylindrical tubes projecting normally from a base plate by which collapse of the tubes under load is effective to absorb energy.

### Background of the Invention

It is well known in motor vehicle bodies to incorporate a structure adjacent the vehicle occupant for absorbing energy.

The prior art has proposed many different arrangements in which foam, plastics or metal materials are configured and mounted in a manner to receive and absorb impact energy.

The present invention relates to a new and improved energy absorbing structure which is readily manufactured by conventional injection molding process and the design of which can be readily tailored to provide a desired level of energy absorption and fit within an available space within the motor vehicle.

### Summary of the Invention

According to the invention, an injection molded base plate has a plurality of hollow cylindrical tubes formed integrally therewith and projecting generally normal therefrom in spaced relation from each other. Each tube has a base integrally molded with the base plate and a distal end spaced from the base so that the tube has a preselected length. The tubes preferably have a greater wall thickness at the base than at the distal end and the wall thickness preferably tapers uniformly from the greater thickness at the base to the thinner thickness at the distal end. The tubes may be interconnected at the base by a web structure integrally molded between the base wall and the tubes to stiffen the tubes against bending. The energy absorbing characteristics of the structure can be varied in a preselected manner by varying the length of the tubes, the number of the tubes, the spacing of the tubes and the wall thickness of the tubes.

### Brief Description of the Drawings

The present invention will now be described, by way of example, with reference to the accompanying drawings, in which:-
Figure 1 shows a vehicle door in which the energy absorbing structure of this invention is mounted;
Figure 2 is a perspective view of the molded plastic energy absorbing structure; and
Figure 3 is a section view taken through the door of Figure 1 and showing the energy absorbing structure.

### Description of the Preferred Embodiment

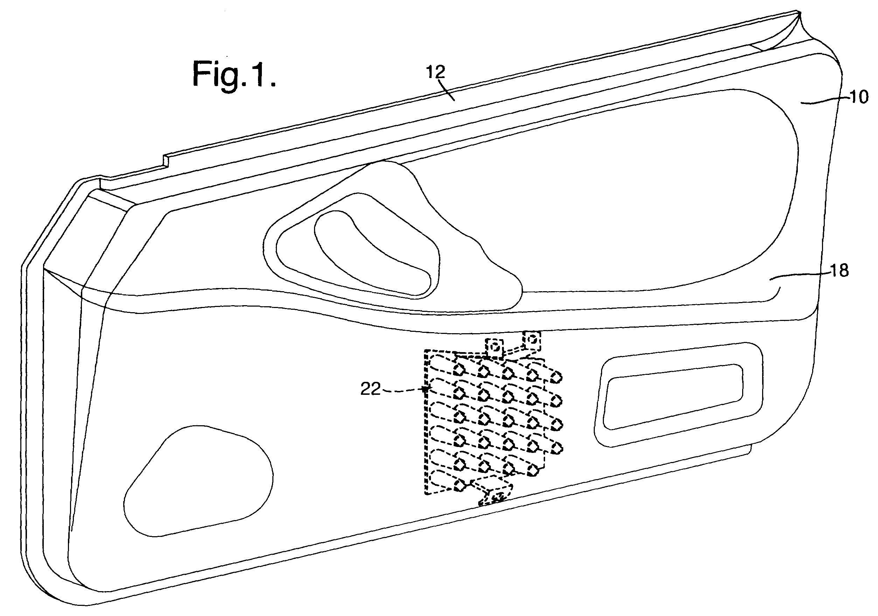

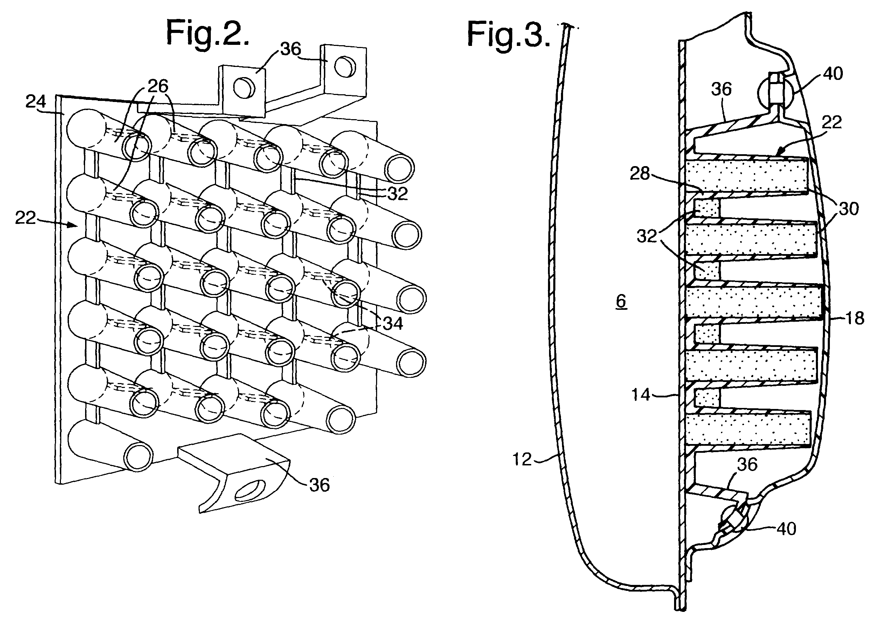

Referring to Figures 1 and 3, it is seen that a vehicle door 10 is conventionally constructed and includes a stamped metal outer panel 12 and a stamped metal inner panel 14 which are suitably welded and hem flanged together to provide a rigid door structure which is suitably hinged on the motor vehicle for movement between opened and closed positions. A cavity 16 is formed between the outer panel 12 and inner panel 14 and houses a conventional window regulator mechanism, not shown, which raises and lowers a window.

The door 10 also has an inner trim panel 18 of molded plastic construction which is suitably attached to the door inner panel 14 in a conventional and well known fashion.

According to the invention, a molded plastic energy absorbing structure, generally indicated at 22, is situated between the door inner panel 14 and the door trim panel 18.

As best seen in Figures 2 and 3, the energy absorbing structure 22 is a one-piece molded plastic construction of a suitably rigid material such as polypropylene, ABS, nylon or similar material. The energy absorbing structure 22 includes a base plate 24 and a plurality of hollow cylindrical tubes 26 which are integrally molded with the base plate 24 and project generally normally therefrom in spaced relation from each other.

As best seen in Figure 3, each tube 26 includes a base portion 28 integral with the base plate 24, and a distal end 30 which is spaced away from the base plate 28 by a preselected distance which may vary to fit the energy absorbing structure 22 within the available space defined between the door inner panel 14 and the door trim panel 18.

Each of the tubes 26 has a greater wall thickness at the base portion 28 than at the distal end 30 and the wall thickness preferably tapers uniformly from the greater thickness at the base portion 28 to the thinner wall thickness at the distal end 30. A network of vertical stiffening webs 32 and horizontal stiffening webs 34 are preferably provided to integrally interconnect the base portions 28 of the tubes 26 to stiffen the base plate 28 and also stiffen the tubes 26 against bending.

A plurality of mounting legs 36 are preferably molded integrally with the base plate 24 and reach into engagement with the trim panel 18. Rivets 40 are installed between the mounting legs 36 and the inner trim panel 18.

As best seen in Figure 3, it will be understood that a load applied against a door inner trim panel 18 will collapse the trim panel 18 leftwardly relative to the door inner panel 14, as viewed in Figure 3. During such movement of the inner trim panel 18, under a significant load, the tubes 26 will collapse via fracture of the molded plastic material, thus absorbing energy. The energy absorption characteristics of the energy absorbing structure 22 may be tuned to provide the desired force versus displacement relationship by varying the design parameters of the energy absorbing structure. For example, the energy absorption characteristic can be varied by controlling the number of tubes 26, and varying the spacing between such tubes. The wall thicknesses and diameter of the tubes may be varied. The size and location of the thickening webs 32 may be varied and the length of the tubes may be varied. The material from which the structure is molded can also be varied.

Accordingly, it will be understood that an important advantage of the energy absorbing structure of this invention is that the design of the structure may be readily varied to tune the energy absorber to a particular vehicle environment. Furthermore, it will be understood that the energy absorbing structure can be integrally molded with the door trim panel 18, if desired. In addition, it will be recognized that the energy absorbing structure of this invention may be employed at various locations within a vehicle body, such as a seat, an instrument panel, a roof panel or other locations as needed.

Thus, it is seen that the invention provides a new and improved energy absorbing structure particularly for application in motor vehicle bodies.

## Claims

1. An energy absorbing structure (22) comprising;
a base plate (24) and a plurality of hollow cylindrical tubes (26) formed integrally with the base plate (24) and projecting generally normally therefrom in spaced relation from each other.

2. The energy absorbing structure (22) of Claim 1 in which each hollow cylindrical tube (26) has a base (28) integrally molded with the base plate (24) and a distal end (30) spaced from the base (28) to define the tube (26) at a pre-selected length by which collapse of the tube (26) under load is effective to absorb energy.

3. The energy absorbing structure (22) of Claim 2 further comprising the tubes (26) having a greater wall thickness at the base (28) than at the distal end (30) and the wall thickness tapering uniformly from the greater thickness at the base (28) to the thinner wall thickness at the distal end (30).

4. The energy absorbing structure (22) of Claim 3 in which the tubes (26) are oriented to extend generally normally to the direction of imposition of the force to be absorbed.

5. The energy absorbing structure (22) of Claim 4 in which the mounting brackets (36) are molded integrally with the base plate (24) to facilitate mounting of the energy absorbing structure.

6. The energy absorbing structure (22) of Claim 5 further comprising web structure (32,34) integrally molded therewith and extending between adjacent tubes (26) to stiffen the tubes (26) against bending.

7. An energy absorbing structure (22) for installation between spaced apart panels (14,18) of a motor vehicle body comprising:
a generally planar base plate (24) having a plurality of hollow cylindrical tubes (26) integrally molded therefrom and extending generally normally from the base plate (24) and being generally axially aligned with the direction of onset of the force to be absorbed, said tubes (26) having tapered wall which are thicker at the base (28) and taper toward a distal end (30), said energy absorbing structure (22) being tuned to absorb energy in a pre-selected manner by varying the length of the tubes, the number of the tubes, the spacing between the tubes, and the wall thickness of the tubes.

8. The energy absorbing structure (22) of Claim 7 further comprising web structure (32,34) integrally molded therewith and extending between adjacent tubes (26) to stiffen the tubes (26) against bending.
